# EUROPEAN PATENT APPLICATION

(11) **EP 4 159 085 A1**
(43) Date of publication of application: **05.04.2023**
(21) Application number: 22199563.2
(22) Date of filing: 04.10.2022
(51) Int. Cl.: A47B 13/02, A47B 13/06, F16B 12/52, F16B 12/30, F16B 7/18

(54) **AN IMPROVED TABLE**

(30) Priority: 04.10.2021 IT 202100025373
(71) Applicant: Volpato Industrie S.p.A., 31027 Spresiano (Treviso) (IT)
(72) Inventor: BILLOTTO, Edoardo, 31027 SPRESIANO (TREVISO) (IT); CECCATO, Davide, 31027 SPRESIANO (TREVSO) (IT)
(74) Representative: Braidotti, Andrea

(57) **Abstract**

Table with metal structure comprising vertical legs (6) consisting of sections of section bar and connected to each other by crosspieces (16), also consisting of sections of section bar, for supporting a table top (4), characterized by the fact that:
- at least one leg (6), preferably each leg (6), comprises a pair of faces (8) angled to each other and presenting, at their upper end a slot (14) open upwards,
and by the fact that said table comprises at each end of at least one crosspiece (16), preferably of each crosspiece (16):
- at least one member with elongated development (26) which is directly engaged in the section of the section bar which defines said crosspiece (16) and which protrudes from the end of the crosspiece (16) passing through said slot (14) and protruding inside the section of the section bar which defines the corresponding leg (6) connected to said crosspiece,
- an abutment element (34) which is provided with at least one through opening (35) which is crossed by said elongated member (26) and which is positioned inside the section of the section bar which defines the corresponding leg (6) connected to said traverse,
- a clamping member (36) for each elongated member (26), said clamping member (36) being positioned inside the section of the section bar which defines the corresponding leg (6) connected to said crosspiece and interacting with the abutment element (34) and with the member having an elongated development (26) so that the portion of said face (8) of said leg (6) in which said slot (14) is made is held in a vise between the end of said crosspiece (16) and said abutment element (34).

## Description

### FIELD OF THE TECHNIQUE

The present invention relates to a table with a metal structure.

### BACKGROUND OF THE INVENTION

Tables with a metal structure comprising crosspieces that can be constrained with the ends having vertical legs to form a support and constraint structure for the table top are known.

In particular, tables are known which, for reasons of disassembly, have crosspieces that can be individually fastened to the legs, to facilitate their assembly also by the user.

A known table of this type comprises four legs consisting of square-section tubular metal sections, closed at both ends by caps generally made of plastic material and presenting, near their upper end, a pair of holes which can be engaged by a pair of threaded pins protruding from the corresponding end of a crosspiece.

To assemble the table, first of all two threaded pins partially protruding from the corresponding end of the crosspiece are applied to each crosspiece in correspondence with the tubular grooves and then these pins are inserted into the holes made in the face of the leg, to which that crosspiece must be fixed.

Subsequently, from the inside of the leg, a perforated check plate and two nuts are applied to that face, which are screwed to the two pins. The subsequent tightening of the nuts on the respective pins, for example with the aid of a spanner, firmly stabilizes each crosspiece to the leg.

Continuing with all the other crosspieces and with all the legs of the table, the complete structure of the latter is obtained.

For the connection of the table top to the structure, special perforated and shaped plates are used, which are screwed from below to the lower surface of the table top and engage with one of their protruding appendages a horizontal rib of each crosspiece, thus stabilizing the table top to its metal frame. Naturally, these operations must be repeated for all the platelets intended to perform this function.

A drawback of these known tables consists in the fact that their assembly presents not a few complexities, since the limited space existing inside each leg makes it difficult to position the contrast plate and the nuts on the respective threaded pins and often involves the fall of these elements on the bottom of the leg, with the need for further awkward maneuvers for their recovery.

This drawback is all the more accentuated the narrower the table legs are and the narrower the space available to the fitter to be able to insert the hand inside the leg.

Another drawback consists in the fact that the positioning and constraint of each support plate of the table top to the top itself is a rather inconvenient operation, as it does not allow any direct stabilization between the plate and the table structure, but requires for this stabilization the constraint of the plate to the table top.

ITMI20070873 describes a structure for joining a leg of a table to a crosspiece, in which said structure comprises three distinct pieces, and in particular an end piece shaped like a lid which can be engaged in an opening obtained at the upper end of the leg, a (second) intermediate piece engageable with the first piece and a (third) end piece engageable with the intermediate piece. Furthermore, a tension screw is provided which joins the three pieces together slidingly and also causes the sliding and transversal expansion of the second and third pieces so as to cause their locking inside the crosspiece.

### OBJECTS OF THE INVENTION

The object of the invention is to provide a table with a metal structure which is, at least in part, free from the drawbacks indicated above.

In particular, the object of the invention is to provide a table in which the fastening of the metal crosspieces to the metal legs is quick and easy even if the dimensions of the legs do not allow the fitter's hand to access them inside.

Another object of the invention is to completely eliminate the risk of the check plates and nuts for fixing the crosspieces to the legs themselves falling on the bottom of the legs.

Another object of the invention is to make the connection of the table top to the metal support structure ensuring the correct and regular position of the support plates and of possible fixing of the top itself and easily modifying this position, if necessary.

Another object of the invention is to achieve these objectives with minimal modifications of the legs of the frame and with the possibility of also using the same crosspieces and the same equipment used to make traditional tables.

Another object of the invention is to propose a table which is easy and quick to assemble.

Another object of the invention is to propose a table which has an alternative characterization, both in constructive and functional terms, with respect to the traditional ones.

Another object of the invention is to propose a table which can be obtained simply, quickly and with low costs.

Another object of the invention is to propose a table which is particularly stable and robust.

Another object of the invention is to propose a table which has high standards, both functional and aesthetic, and at the same time of accessible cost, thus allowing the possibility of its widespread diffusion.

Another object of the invention is to propose a table which allows to obtain an overall pleasant aesthetic effect and which provides the observer with the sensation of being in front of a high quality product, both from an aesthetic and functional point of view.

### SUMMARY OF THE INVENTION

All these objects and others that will emerge from the following description are achieved according to the invention with a table with a metal structure as defined in claim 1.

The present invention relates to a table with a metal structure comprising vertical legs made up of sections of section and connected to each other by crosspieces, also made up of sections of section bar, to support a table top, in which:
- each leg comprises a pair of faces angled to each other and affected at their upper end by a slot open upwards,
and in which said table comprises at each end of at least one crosspiece:
- at least one member with elongated development which is directly engaged in the section of the section bar which defines said crosspiece and which protrudes from the end of the crosspiece through said slot and protruding inside the section of the section bar which defines the corresponding leg connected to said crosspiece,
- an abutment element which is provided with at least one through opening which is crossed by said elongated member and which is positioned inside the section of the section bar which defines the corresponding leg connected to said crosspiece,
- a clamping member for each elongated member, said clamping member being positioned inside the section of the section bar which defines the corresponding leg connected to said crosspiece and interacting with the abutment element and with the elongated member in so that the portion of said face of said leg in which said slot is formed is held in a vise between the end of said crosspiece and said abutment element.

The present invention relates to a table with a metal structure formed by vertical legs consisting of sections of section bar and connected to each other by crosspieces, also consisting of sections of section bars, for supporting a table top, characterized by the fact that each leg has a pair of flat faces angled to each other and affected at their upper end by a slot open upwards and each transverse is provided with at least one threaded pin, which protrudes from the end of the crosspiece itself and supports a check plate and a nut, with which it is inserted into said open slot and is then locked to said leg following screwing to the bottom of said nut to clamp the portion of said face between the end of said crosspiece and said check plate.

### DESCRIPTION OF THE FIGURES

The present invention is further clarified hereinafter in some of its preferred embodiments, given purely by way of non-limiting example with reference to the attached drawing tables, in which:

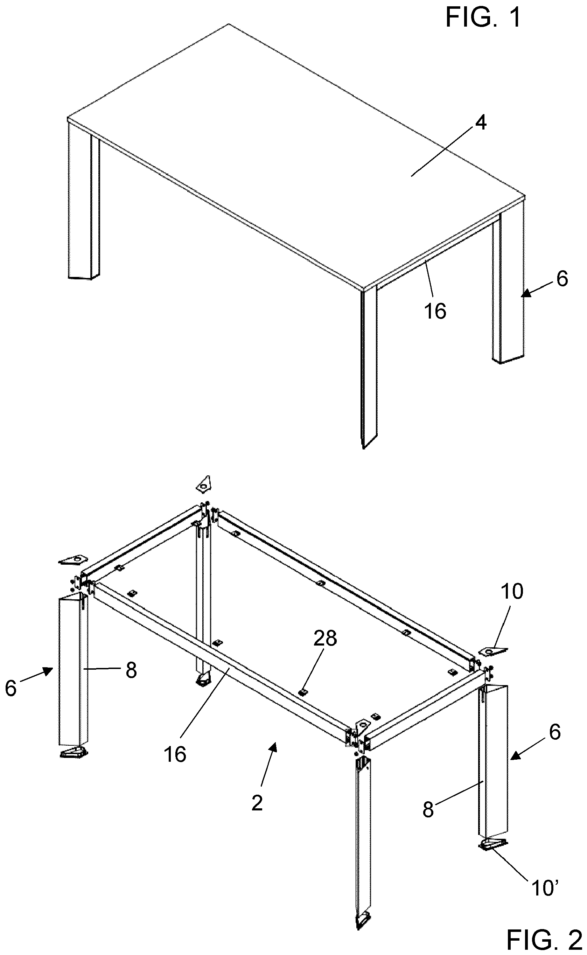

- Figure 1: shows a perspective view of a table according to the invention,
- Figure 2: shows it in an exploded perspective view,
- Figure 3: shows an enlarged detail of one end of a crosspiece in an exploded perspective view during the preparation phase for being attached to a leg,
- Figure 4: shows the same view of fig. 3 the enlarged detail of two crosspieces which are about to be fastened to the leg of the table,
- Figure 5: shows in the same view of fig. 3 the final phase of closing the two ends of a leg to which two crosspieces have already been connected,
- Figure 6: shows an enlarged cross section with a support plate applied to the table top,
- Figure 7: shows the mode of constraint and adjustment of a support plate of the table top with a crosspiece,
- Figure 8: shows a perspective view of a telescopic type crosspiece in compacted condition, and
- Figure 9: shows it in extended condition.

### DETAILED DESCRIPTION OF THE INVENTION AND OF SOME OF ITS PREFERRED EMBODIMENTALS

As can be seen from the figures, the table according to the invention comprises a metal structure (frame), globally indicated with 2 and a top 4, which can be made of wood or of any other suitable material.

The metal structure comprises vertical legs 6, made up of sections of section bar, and of crosspieces 16, also made up of sections of section bars, which connect the vertical legs 6 between each other.

Each leg 6 comprises a pair of flat faces 8 angled to each other and provided at their upper end a slot 14 open upwards.

In the illustrated embodiment, the structure (frame) 2 comprises four legs 6, consisting of tubular metal section bars, which can have practically any shape. Conveniently, in the case of structure 2 with four legs 6, each leg 6 can comprise two flat faces 8 arranged substantially at 90° to each other. Of course, should the table have a different number of legs, the two flat faces 8 will have to be differently angled according to the table configuration.

Preferably, each leg 6 is also provided at both ends with two caps 10,10', of which the upper one 10 acts as an element for closing the leg and supporting the surface 4, and for this purpose it can advantageously present a seat 12 for an elastic element for supporting the surface itself.

Advantageously, the lower cap 10', in addition to performing the function of closing the leg, also performs the function of supporting foot of the table on the floor.

Conveniently, as said, each leg 6 presents, on each of the two flat faces 8, the slot 14, which preferably runs parallel to the axis of the leg itself and is open upwards. Conveniently, the slot 14 can be variously shaped. Preferably, the slot 14 has an elongated development.

Advantageously, the structure 2 of the table according to the invention in the particular embodiment illustrated also comprises four crosspieces 16.

Conveniently, each crosspiece 16 is constituted by a section of the section bar which comprises at least one internal tubular rib 20. Preferably, said at least one internal tubular rib 20 is made inside the same section of the section bar that defines the crosspiece.

Conveniently, each crosspiece 16 comprises a section of the section bar which can comprise at least one continuous longitudinal groove 18.

Preferably, each crosspiece 16 is constituted by a section of the section bar comprising a continuous longitudinal groove 18 and two internal tubular ribs 20.

Advantageously, the section of the section bar of each crosspiece 16 has a rectangular outer section.

Preferably, the groove 18 runs in correspondence with the corner formed by the upper horizontal face 22 with the internal vertical face 24 while the two tubular ribs 20 overlap. Preferably, the two tubular ribs 20 start from the two upper 22 and lower 22' horizontal faces, have their axis arranged on the same vertical plane and protrude towards the inside of the section bar.

The table comprises, in correspondence with each crosspiece, at least one member 26 with elongated development which is configured to pass through the slot 14 open upwards and to be engaged in the section of section bar which defines said crosspiece 16. The member 26 also it protrudes from the end of the crosspiece 16 passing through said slot 14 and protruding inside the section of the section bar which defines the corresponding leg 6 connected to said crosspiece.

Preferably, the member 26 is configured to be engaged directly within a corresponding tubular rib 20 of the crosspiece 6. Preferably, the member 26 is threaded at least in part or entirely and can be removably engaged by screwing into a corresponding tubular rib 20 of the crosspiece 16 Preferably, the inner side surface of the tubular rib 20 may or may not be threaded.

Preferably, the member 26 comprises a threaded pin.

Advantageously, at the end of each crosspiece, two members 26 are provided, each of which is intended to be screwed into a corresponding tubular rib 20. Preferably, the two tubular ribs 20 and therefore also the two members 26 are superimposed and, more preferably, they are substantially arranged on the same vertical plane.

The table comprises, at each end of each crosspiece, an abutment element 34 which is provided with at least one through opening 35 which is crossed by said elongated member 26 and which is positioned inside the section of the section bar which defines the corresponding leg 6 connected to said crosspiece.

The table comprises, at each end of each crosspiece, at least one clamping member 36 for each elongated member 26. The clamping member 36 is positioned inside the section of the section bar which defines the corresponding leg 6 connected to said crosspiece and interacts with the abutment element 34 and with the elongated member 26 so that the portion of said face 8 of said leg 6 in which said slot 14 is formed is clamped between the end of said crosspiece 16 and said abutment element 34.

Conveniently, each member 26 is configured so as to have a threaded (or self-threding) portion which is intended to be screwed into the rib 20 and so that it can be inserted inside the slot 14 obtained in a face 8 of the leg 6 thus protruding inside the section of the section bar which defines the leg by supporting an abutment element 34.

Conveniently, moreover, in correspondence of the end of each member 26 which is intended to protrude inside the leg 6, a clamping member 36 is provided.

Preferably, the clamping member 36 can be in one piece with the member 26 (thus defining a bolt or a screw threaded at least in part), or it can be in a separate piece (for example it is a nut 36') with respect to the member 26 (which is for example defined by a threaded stem).

Preferably, two threaded pins 26' can be screwed to each of the two tubular ribs 20, at both ends of the crosspiece 16, having a length such as to ensure good stability with the portion screwed into the rib 20 and to protrude from the end of the crosspiece to an extent sufficient to ensure its connection to leg 6, as will be seen better below.

Conveniently, the table according to the invention comprises a clamping member 36 which can be a nut 36'or, in an embodiment not shown, can also be made in a single body with the member 26.

Conveniently, the table according to the invention comprises an abutment element 34, preferably a check plate 34', which is configured to be inserted inside the leg 6 and is provided with at least one through opening 35 for passing through the member 26. Conveniently, the abutment element 34 is configured to interact with the clamping member 36 so that, following the actuation of said clamping member, a portion of the face 8 of the leg 6 is clamped between the end of the crosspiece and the abutment element 34. Preferably, the abutment element 34 is configured to be inserted entirely and completely inside the leg 6, without protruding inside the slot 14.

Preferably, the abutment element 34 consists of a plate with a constant thickness along its entire surface extension.

Conveniently, in an embodiment not shown in the figures in which the clamping member 36 is formed in a single body with the member 26, the through opening 35 of the abutment element 34 has an open side and communicating with the edge of the abutment element itself. Conveniently, in the embodiment illustrated in the figures, in which the clamping member 36 is defined by a nut 36' and is therefore obtained in a separate piece from the member 26 which is instead defined only by a threaded pin / stem 26', the through opening 35 of the abutment element 34 can be defined by a through hole closed on all sides.

Preferably, the table according to the invention also comprises a plurality of plates 28 for connecting the top 4 to the structure 2.

Each plate 28 is preferably made of metal and essentially has a Z-shaped cross section.

Advantageously, each plate 28 can comprise two portions between which are not coplanar, and preferably parallel to each other, and in particular can comprise a lower portion 30, preferably flat, intended to be inserted into the longitudinal groove 18 of the crosspieces 16, and an upper portion 32, preferably flat, which is configured to be in place substantially coplanar with the upper face 22 of the crosspiece 16. Preferably, the upper portion 32 can present a hole.

Preferably, the lower portion 30 of each plate 28 has a thickness just below the height of the groove 18 which will house it.

Advantageously, the lower portion 30 of each plate 28 can present, on at least one surface, a toothing cooperating with a similar toothing formed in the facing internal wall of said groove. Preferably, the lower portion 30 of each plate 28 has the upper surface which presents a toothing cooperating with a similar toothing formed in the upper internal surface of the groove 18 so as to allow a forced introduction of the lower portion 30 of the plate 28 into the groove 18 but at the same time its free flow within it.

Advantageously, the assembly of the table according to the invention takes place as follows. The assembly of the table in the embodiment illustrated in the figures is described below, however the skilled person understands that the same assembly method also applies to a table according to the embodiments or variants as mentioned above.

In particular, to assemble the table, the two threaded pins 26' are first applied to each end of each crosspiece 16 in correspondence with the two tubular ribs 20, so that a portion of each pin 26' remains firmly constrained within the tubular rib 20, and therefore to the crosspiece 16, and that the remaining portion protrudes from the end of the crosspiece itself.

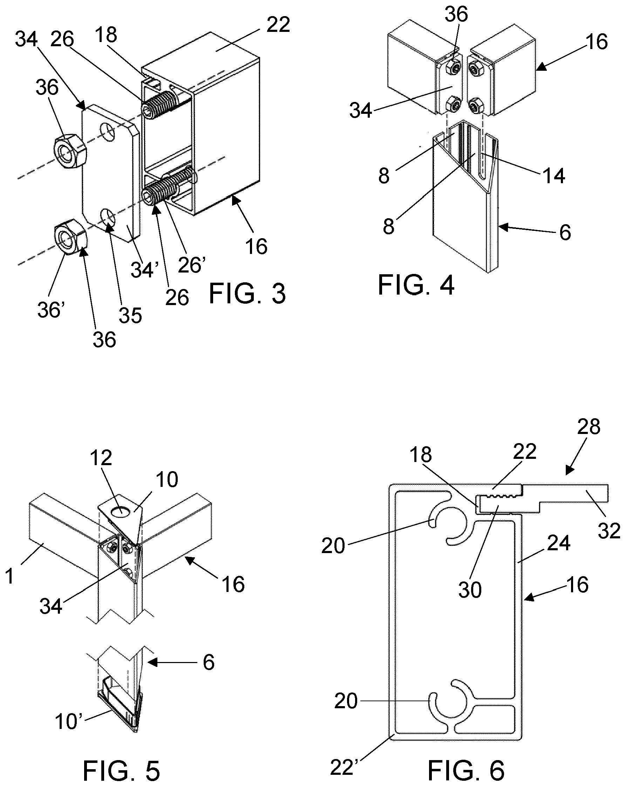

A check plate 34' is then applied to the two protruding portions of the two pins 26' and then a nut 36', which however is not fully screwed, to allow the plate 34' to be spaced from the end of the crosspiece 16 (fig. 3).

The end of the crosspiece 16 thus prepared is then engaged in a leg 6, so that the two threaded pins 26' fit into the corresponding slot 14 of the leg 6 and that the check plate 34' and the two nuts 36' are arranged inside the leg itself.

The two nuts 36'can then be tightened with a wrench or other suitable tool, until the crosspiece 16 is rigidly locked to the leg 6.

Then proceed with the other crosspieces 16 and with the other legs 6 until the complete structure 2 of the table is obtained.

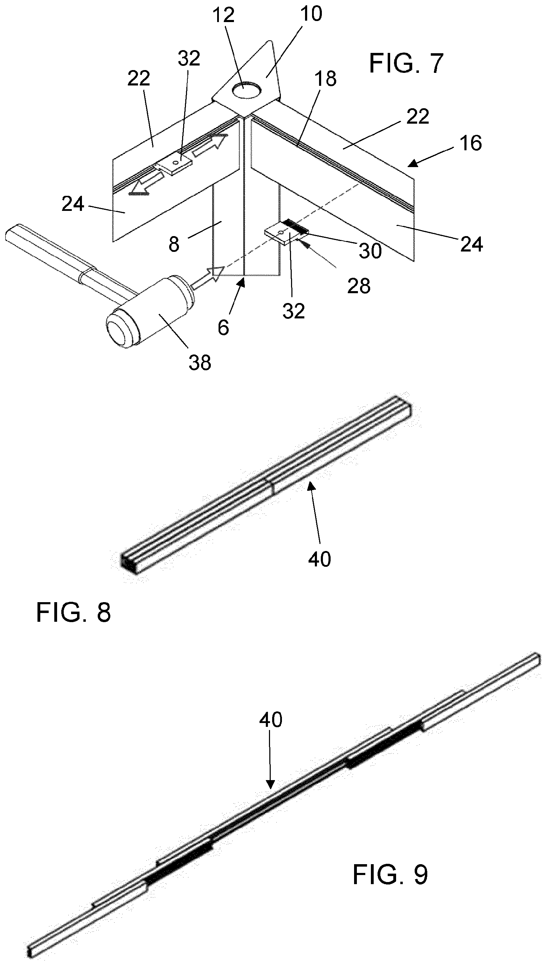

Subsequently, the plates 28 are inserted in the selected positions of the longitudinal groove 18 of all the crosspieces 16, for example with a hammer 38, so that their upper portion 32 is coplanar with the upper face 22 of the crosspieces 16. insertion of each plate 28 in the respective groove 18 proves to be incorrect, the plate itself can easily be made to slide along the groove 18 until it reaches the correct position (fig. 7).

Finally, the top 4 is placed on the structure 2 thus prepared, which can then be fixed to the structure by means of screws applied from below in correspondence with each plate 28.

From what has been said it is clear that the table according to the invention has a series of advantages compared to traditional tables of this type, and in particular:
- it allows the crossbars 16 to be quickly, comfortably and safely prepared for their connection with the legs 6 before making their mutual engagement,
- eliminates the risk of falling of the clamping member 36 and of the abutment elements 34 inside the legs in the phase of mutual engagement,
- ensures a fast and stable and at the same time modifiable constraint of the plates 28 supporting the table top 4 to the crosspieces 16.

In the solution of ITMI20070873 the first lid piece must have an outer frame and a central portion which is shaped to engage in shape relationship within the opening defined at the upper end of the leg and also so as to penetrate inside the second (intermediate) piece which is then locked, together with the third (end) piece inside the crosspiece, following the transverse expansion caused by the tension screw. Therefore, in the solution of ITMI20070873, the face of the leg is clamped between the first piece and the second piece and, the latter, is then locked together with the third piece inside the crosspiece. Unlike the solution of ITMI20070873, in the solution according to the present invention the face of the leg is instead clamped between the abutment element and directly with the end of the crosspiece. This is particularly advantageous in that, since there are fewer pieces, it allows to simplify both the construction (thus reducing costs) and the assembly of the table structure, and at the same time allows for a more stable and robust structure.

In the embodiment illustrated in Figures 8 and 9, the same principle described above is applied to an extendable table, that is to say to a table, in which the opposite crosspieces 40, longitudinal and / or transverse, instead of being fixed, are of the telescopic type, but instead of being formed by reciprocally sliding and asymmetrical telescopic elements with respect to the transverse center plane of the crosspiece itself, they are formed by reciprocally sliding elements, symmetrically placed with respect to that transverse plane. This makes the two extreme elements of the telescopic crosspiece 40 perfectly aligned with each other and allows their direct connection to the legs 6, similarly to what has been seen for the embodiment with fixed crosspieces 16, unlike what currently occurs for traditional extendable tables, in which the extreme elements of each telescopic crosspiece are not aligned with each other and require the interposition between each crosspiece and the leg of a compensation plate for this offset.

The present invention has been illustrated and described in some of its preferred embodiments, but it is understood that executive variations may be applied to it in practice, without however departing from the scope of protection of the present patent for industrial invention.

## Claims

1. Table with metal structure comprising vertical legs (6) consisting of sections of section bar and connected to each other by crosspieces (16), also consisting of sections of section bar, for supporting a table top (4), **characterized by** the fact that:
- at least one leg (6), preferably each leg (6), comprises a pair of faces (8) angled to each other and presenting, at their upper end a slot (14) open upwards,
and by the fact that said table comprises at each end of at least one crosspiece (16), preferably of each crosspiece (16):
- at least one member with elongated development (26) which is directly engaged in the section of the section bar which defines said crosspiece (16) and which protrudes from the end of the crosspiece (16) passing through said slot (14) and protruding inside the section of the section bar which defines the corresponding leg (6) connected to said crosspiece,
- an abutment element (34) which is provided with at least one through opening (35) which is crossed by said elongated member (26) and which is positioned inside the section of the section bar which defines the corresponding leg (6) connected to said traverse,
- a clamping member (36) for each elongated member (26), said clamping member (36) being positioned inside the section of the section bar which defines the corresponding leg (6) connected to said crosspiece and interacting with the abutment element (34) and with the member having an elongated development (26) so that the portion of said face (8) of said leg (6) in which said slot (14) is made is held in a vise between the end of said crosspiece (16) and said abutment element (34).

2. Table according to claim 1, **characterized in that** said member with elongated development (26) comprises at least one threaded pin (26').

3. Table according to one or more of the preceding claims, **characterized in that** said abutment element (34) comprises a check plate (34').

4. Table according to one or more of the preceding claims, **characterized in that** said clamping member (36) comprises a nut (36').

5. Table according to claims 2 to 4, **characterized in that** said at least one threaded pin (26') protrudes from the end of the crosspiece and supports the check plate (34) and a nut (36), with which it is inserted in said upward open slot (14) and is then locked to said leg (6) following the screwing of said nut (36) to the bottom to clamp in this way the portion of said face (8) between the end of said crosspiece (16) and said check plate (34).

6. Table according to one or more of the preceding claims, **characterized in that** each crosspiece (16) comprises an internal tubular rib (20) within which a corresponding elongated member (26) engages, preferably by screwing.

7. Table according to one or more of the preceding claims, **characterized in that** each crosspiece (6) comprises a pair of internal tubular ribs (20), in which two respective elongated elements (26) can be engaged for the constraint of said crosspiece (16) to said leg (6).

8. Table according to one or more of the preceding claims, **characterized in that** each crosspiece (16) comprises a longitudinal groove (18), into which plates (28) supporting the table top (4) can be inserted.

9. Table according to one or more of the preceding claims, **characterized in that** each support plate (28) slides along the corresponding groove (18) obtained in each crosspiece (16,38).

10. Table according to one or more of the preceding claims, **characterized in that** each support plate (28) has such dimensions as to be inserted by forcing into the corresponding groove (18), even though it can slide along it.

11. Table according to one or more of the preceding claims, **characterized in that** each support plate (28) has a substantially Z-shaped cross section.

12. Table according to one or more of the preceding claims **characterized in that** it comprises at least one plate (28) of support of the table top (4), and in which said at least one plate (28) comprises a lower portion (30) which can be inserted into a groove (18) obtained in at least one crosspiece (6) and an upper portion (32) coplanar with the upper face (22) of said at least one crosspiece (16,38) when said plate (28) is inserted in said groove (18).

13. Table according to one or more of the preceding claims, **characterized in that** the lower portion (30) of each support plate (28) presents on at least one surface a toothing cooperating with a similar toothing obtained from the facing internal wall of said groove (18).

14. Table according to one or more of the preceding claims, **characterized in that** at least one pair of opposing crosspieces (38) is of the telescopic type.

15. Table according to the preceding claim **characterized in that** each telescopic crosspiece (38) is of the symmetrical type with respect to its transverse center plane.
